# EUROPEAN PATENT SPECIFICATION

(11) **EP 2 318 798 B1**
(45) Date of publication and mention of the grant of the patent: **25.04.2012**
(21) Application number: 09769651.2
(22) Date of filing: 25.06.2009
(51) Int. Cl.: F28F 9/26, F28F 21/08, F28F 19/04

(54) **TOTAL ANTICORROSION PROTECTION HEATING RADIATOR ELEMENT, AND METHOD OF ANTICORROSION TREATMENT OF HEATING RADIATOR ELEMENTS**
HEIZKÖRPERELEMENT MIT VOLLSTÄNDIGEM KORROSIONSSCHUTZ UND VERFAHREN ZUR KORROSIONSBEHANDLUNG VON HEIZKÖRPERELEMENTEN
ELEMENT DE RADIATEUR DE CHAUFFAGE MUNI D'UNE PROTECTION ANTICORROSION TOTALE, ET PROCEDE DE TRAITEMENT ANTICORROSION POUR ELEMENTS DE RADIATEUR DE CHAUFFAGE

(30) Priority: 26.06.2008 IT MI20081169
(43) Date of publication of application: 11.05.2011
(73) Proprietor: FONDITAL S.p.A., Vobarno (BS) (IT)
(72) Inventor: FRANZONI, Francesco, I-25070 Casto (IT)
(74) Representative: Cernuzzi, Daniele
(86) International application number: PCT/IB2009/006063
(87) International publication number: WO 2009/156839

(56) References cited:
- FR-A- 1 475 430
- FR-A- 2 916 525
- GB-A- 1 114 121

## Description

### TECHNICAL FIELD

The present invention relates to a total anti-corrosion protection heating radiator element, and to a method of anti-corrosion treatment of heating radiator elements.

### BACKGROUND ART

As known, a die-cast aluminium radiator normally consists of a battery of elements coupled to one another to form an appropriately sized radiator; each element has an aluminium body having an inner chamber in which heating water circulates.

The element normally has a tubular body extending longitudinally and transversal coupling sleeves: an end part of the tubular body usually extends along an axis beyond a pair of sleeves and forms a bottom of the element, closed by a cap.

For example, GB1114121 discloses a heating radiator according to the preamble of claim 1.

The known radiator elements are normally painted on the outside but not on the inside; the inner chamber is thus delimited by aluminium walls, the surfaces of which are, in use, directly in contact with water and are not protected against corrosion.

Indeed, the elements are usually painted by means of electrophoresis, mainly anaphoresis, painting processes. These methods, as commonly implemented, do not allow the inner chamber of a radiator element to be completely painted, since the chamber has a substantially tubular, very elongated, relatively narrow shape.

On the other hand, electrophoresis painting is not normally applicable to elements of this type, because the penetration of the paint may not be complete, both due to the Faraday cage effect, which occurs in this type of structure, and because of air pockets in the end portions of the elements immersed in the painting baths.

In particular, when the element is immersed in a painting bath in the usual position reversed with respect to the position of use (i.e. with the bottom up), an air pocket is indeed formed in the bottom, which prevents the paint from accessing and settling in this zone. On the other hand, the same problem (formation of an air pocket) also occurs when the element is immersed in any other treatment tank, e.g. for washing and for all pre-treatments which are normally carried out before painting.

Therefore, aluminium radiator elements internally protected against corrosion are not currently available.

### DISCLOSURE OF INVENTION

It is an object of the present invention to provide a radiator element which overcomes these drawbacks and, in particular, to provide a radiator element having a total anti-corrosion protection on all the inner surfaces of the element.

The present invention thus relates to a heating radiator element and to a method for the anti-corrosion treatment of heating radiator elements as defined in essential terms in the appended claims 1 and 9, respectively.

The particular conformation of the bottom cap allows the formation of air pockets to be avoided precisely inside the bottom, when the element is immersed in a treatment composition in the usual position reversed with respect to the position of use (i.e. with the bottom up) or in all cases during a step of filling the inner chamber with a treatment composition. Thereby, all the inner surfaces of the element may be entirely treated, and specifically painted.

A radiator element completely protected against corrosion, also on all the inner surfaces thereof, which may thus work over long periods of time even with particularly aggressive waters, is thus provided.

### BRIEF DESCRIPTION OF THE DRAWINGS

The invention is described in the following non-limitative embodiments, with reference to the accompanying figures, in which:
- figure 1 is a diagrammatic, longitudinal section view of a radiator element in accordance with the invention;

- figure 2 is a longitudinal section view according to a plane orthogonal to the plane of figure 1 of a detail of the element in figure 1, with a further enlarged detail;
- figure 3 diagrammatically shows a first embodiment of the method of anti-corrosion treatment in accordance with the invention, with a detail on enlarged scale;
- figure 4 diagrammatically shows a second embodiment of the method of anti-corrosion treatment in accordance with the invention.

### BEST MODE FOR CARRYING OUT THE INVENTION

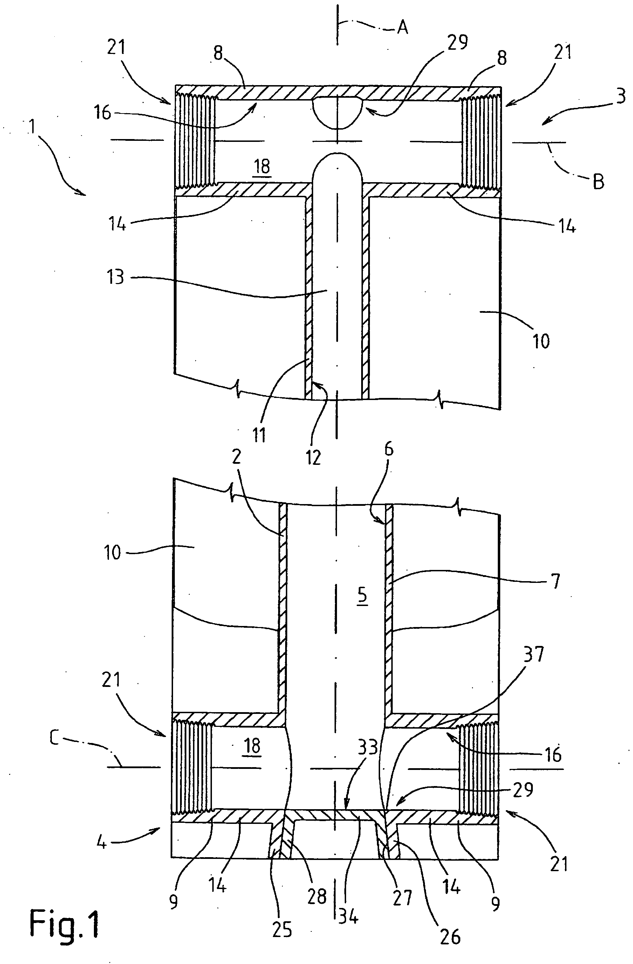

With reference to figure 1, a heating radiator element 1 has a body 2 made of aluminium, e.g. die-cast aluminium, substantially extending along an axis A between two axial ends 3, 4 which, with reference to the normal, substantially vertical position of use of element 1, are the upper and lower ends, respectively; body 2 is provided with an inner chamber 5 for water circulation, delimited by inner surfaces 6 of the aluminium body 2.

Term "chamber" includes every zone inside the element 1 which, in use, is wet by the water circulating in the element 1, and "inner surfaces" are all the surfaces inside the body 2 which delimit the chamber 5 (thus being in contact with water in use).

In particular, the body 2 of the element 1 comprises at least one main tubular body 7, which extends longitudinally along axis A; two pairs of transversal coupling sleeves 8, 9; and a plurality of radiating fins and/or plates 10 variously connected to each other and/or to the tubular body 7.

The tubular body 7 may be variously shaped and have a differently shaped cross section, also variable along axis A. The tubular body 7 has a side wall 11 arranged about axis A and provided with an inner surface 12 which delimits a main portion 13 of chamber 5.

Two pairs of sleeves 8, 9 are arranged at the axially opposite ends 3, 4 of the tubular body 7, respectively; the sleeves 8, 9 of each pair extend from opposite sides of the tubular body 7, substantially orthogonal to axis A, and extend along respective axes B, C substantially parallel to each other and orthogonal to axis A.

Each of the sleeves 8, 9 has a side wall 14 provided with an inner lateral surface 16, which delimits a channel 18. Each sleeve 8, 9 is provided with an end opening 21, provided with an inner threading for connecting several elements 1 to form a radiator, by inserting specific joints (known and not shown).

The pair of sleeves 8, which in use and thus with the element 1 being vertical is in the upper position, is connected to the tubular body so as to form a T-shaped connection; the pair of sleeves 9, which in use and thus with the element 1 being vertical is in the lower position, intersects the tubular body 7 at a predetermined distance from the end 4 of the tubular body' 7, and is thus cross-connected with the tubular body 7.

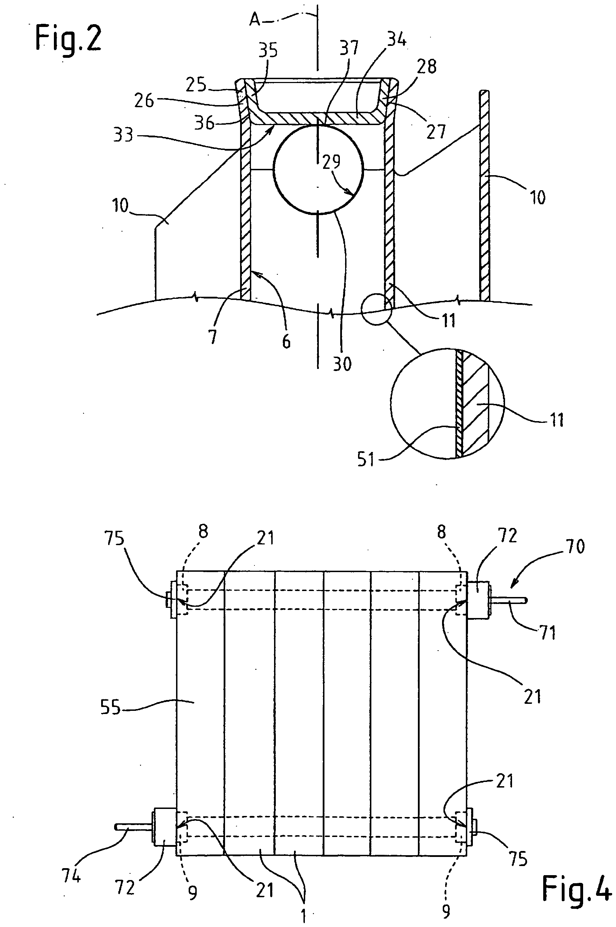

With reference also to figure 2, an end part 25 of the tubular body 7, which extends along axis A beyond the pair of lower sleeves 9 and is delimited by an end wall portion 26, forms a bottom of the element 1, having a bottom opening 27 closed by a cap 28.

Each sleeve 8, 9 is internally connected to the tubular body 7 by means of a hole 29 formed through the side wall 11 of the tubular body 7 and delimited by a peripheral edge 30; the sleeves 8, 9 of each pair have facing holes 29 aligned along the axes B, C.

Chamber 5 comprises the main portion 13, essentially defined within the tubular body 7, and the channels 18 defined within the sleeves 8, 9; the channels 18 are connected to the main portion 13 by means of the holes 29.

The cap 28 has a closing surface 33 arranged inside the end part or bottom 25.

The inner surfaces 6 of the body 2 include the surface 12 which delimits the main portion 13 of chamber 5, the surfaces 16 which delimit the channels 18, and the closing surface 33 of the cap 28.

The cap 28 may have different shapes: in the non-limitative example shown in figures 1 and 2, the cap has a bottom wall 34 and an annular collar 35, which extends from a peripheral edge 36 of the bottom wall 34. The closing surface 33 is defined by a surface of the bottom wall 34 facing the side opposite to collar 35.

The cap 28 is preferably completely inserted into the bottom 25, i.e. into the end part of the tubular body 7. The closing surface 33 of the cap 28 is arranged within the bottom 25 and in close proximity of the edges 30 of the holes 29 of the lower sleeves 9, and specifically in close proximity of portions 37 of the edges 30 facing the bottom opening 27 and closer to the bottom opening 27.

In particular, the closing surface 33 is substantially tangent to the holes 29 formed in the side wall 11 of the tubular body 7 and which connect sleeves 9 to chamber 5.

The cap 28 is integrally fixed and fluid-tightly coupled to the bottom 25 and specifically to the end wall portion 26.

The cap 28 may be coupled to the bottom 25 in various manners, e.g. by welding, plastic deformation, pressure seals, gluing, etc. The cap 28 is preferably fixed to the bottom 25 (i.e. the end wall portion 26) by means of a radially external weld, i.e. by means of a weld provided on the radially external surface of the cap 28 (specifically of the collar 35); thereby, welding residues or flashes are avoided within the chamber, which could in use detach and cause working problems of element 1.

Furthermore, the end part 25 of the tubular body 7, which forms the bottom, preferably has a flaring diverging outwards (i.e. towards the bottom opening 27) and the cap 28 (in particular, its collar 35) has a corresponding flared shape.

It is understood that the cap 28 may be differently shaped; for example, according to a possible variant, the cap is substantially flat, e.g. consisting of the bottom wall 34 only, and is accommodated within the bottom 25 with the peripheral edge 36 inserted into a seat obtained in the end wall portion 26, which could also be substantially parallel to axis A, and not flared.

Chamber 5 is entirely coated with a protective coating 51 made of an anti-corrosion polymeric coating material applied on all the inner surfaces 6 of the aluminium body 2 and which protects in use the surfaces 6 against the contact with water.

In particular, the coating 51 is made of an electrophoresis paint, e.g. epoxy or acrylic resins, or of a fluorinated polymeric coating (e.g. Teflon-based) or similar products.

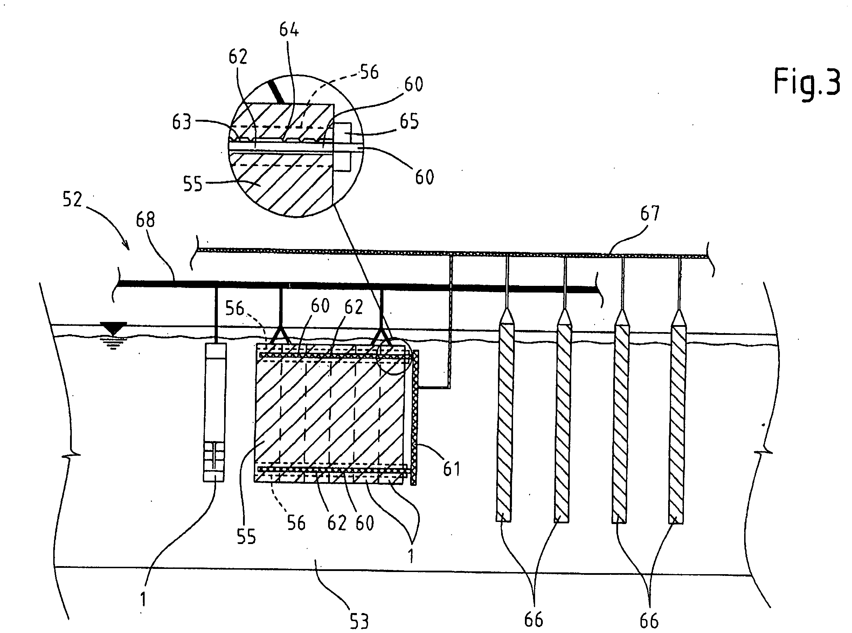

Figure 3 diagrammatically shows a first embodiment of the method of anti-corrosion treatment of element 1, wherein the coating 51 is deposited on the surfaces 6 by means of an electrochemical deposition process, and specifically by means of an electrophoresis process (cataphoresis or anaphoresis painting).

As known, electrophoresis processes exploit the electrokinetic phenomenon consisting in the movement of electrically charged particles dispersed in a fluid due to an electrical field applied by a pair of electrodes to the fluid itself. The particles move towards the cathode (cataphoresis) if they are positively charged and towards the anode (anaphoresis) if they are negatively charged.

Elements 1, individually or in a battery, are hung from an actuating system 52, which conveys them towards a treatment tank 53, which is contextually used for painting the outer parts of elements 1.

In order to obtain a good painting of the outer surfaces of elements 1, elements 1 are vertically hung in a reversed position with respect to the position of normal use, and thus with the sleeves 9 and the end part 25 forming the bottom facing upwards, and the sleeves 8 facing downwards.

The example in figure 3 shows a battery 55 of elements 1 coupled to one another by means of respective sleeves 8, 9 (and thus forming a radiator of desired length); the respective openings 21 of end elements 1 of battery 55 are open. The sleeves 8, 9 of the elements are obviously aligned and define respective continuous pipes 56 formed by the channels 18 of the single sleeves 8, 9.

The tank 53 contains an electrodeposition bath, for example consisting of water and a liquid treatment composition containing an electrodeposition material which forms the anti-corrosion polymeric coating material; in particular, the bath contains a cataphoretic or anaphoretic paint (i.e. consisting of positively or negatively charged particles) comprising polymeric resins (for example, epoxy, acrylic, etc.), pigments, fillers, additives and solvents.

Removable electrodes 60 are inserted into the pipes 56. The electrodes 60 are preferably fork-shaped, and have a support 61 from which two parallel rectilinear conducting bars 62 protrude, which bars may be inserted into the sleeves 8, 9; each bar 62 is externally coated with an insulating sheath 63, having openings 64 spaced along the bar 62. The electrodes 60 are further provided with insulating abutment portions 65, for example defined by discs mounted onto the bars 62 close to the support 61 and abuttingly cooperating, in use, with respective frontal edges of the sleeves 8, 9 through which the electrodes are inserted.

The electrodes 60, as further electrodes 66 immersed in the tank 53, are electrically connected by means of a connection 67 to a pole of a rectifier (known and not shown), while the elements 1 are connected to_ the opposite pole, by means of a connection 68 associated with the actuating system 52.

Obviously, it is possible to operate both with cataphoresis paints and anaphoresis paints, by connecting the electrodes 60, 66 and the elements 1 to the appropriate poles: the elements 1 will be connected to the pole having opposite sign with respect to the charges of the paint particles, so as to attract these particles.

When the battery 55 is immersed in the electrodeposition bath and an electrical field is applied (by applying a predetermined voltage) in the tank 53, the paint particles migrate towards the elements 1, where the paint sets and deposits on the surfaces 6 thus forming the coating 51.

After deposition of the coating 51, the elements 1 are extracted from the tank 53 and (with the electrodes 60 being removed) sent to a so-called step of baking, e.g. carried out in a furnace, for drying and possibly polymerizing the polymeric coating material.

It is understood that the described treatment may be also individually applied to each element 1, before the elements are joined to form a battery 55. In this case, the use of electrodes 60 inserted into the sleeves 8, 9 could be unnecessary, but it would be needed to appropriately modify the operating parameters of the electrodeposition process.

In general, the time of contact between the elements 1 and the treatment composition (i.e. permanence time of the elements 1 in the bath, determined by the rate with which the actuating system 52 conveys the elements through the tank 53) and/or other operative parameters which affect the deposition of the coating 51, such as in particular the voltage applied to the bath to promote the electrochemical deposition of the coating material, are selected so as to obtain a complete coating of all the surfaces 6.

By way of example, a complete coating of the surfaces 6 is obtained:
a) without using the electrodes 60, by treating each element 1 individually with a contact time lower than about 150 seconds, and in particular in the range from about 90 to about 150 seconds, and preferably about 120 seconds, and an applied voltage lower than about 360 volts, and in particular in the range from about 250 to about 350 volts;
b) without using the electrodes 60, by treating batteries 55 of few elements 1, in particular up to four elements 1, with a contact time higher than about 150 seconds, and preferably about 180 seconds, and a voltage in the range from about 250 to about 400 volts, and preferably higher than about 350 volts;
c) with the electrodes 60, by treating batteries 55 consisting of several elements 1, in particular of more than four elements 1, with a contact time lower than about 150 seconds, and in particular in the range from about 90 to about 150 seconds, and preferably about 120 seconds, and an applied voltage lower than about 360 volts, and in particular in the range from about 250 to about 350 volts.

According to the embodiment in figure 4, the coating 51 is applied by introducing a liquid treatment composition containing the polymeric coating material, which has features of adhesion to the aluminium surfaces and protection against corrosion, into a single element 1 or, as shown in figure 4, in a battery 55 of coupled elements 1. For example, fluorinated polymeric compounds (such as Teflon) or similar products are used.

The battery 55 is connected to a system 70 for the forced circulation of the treatment composition; two of the four total openings 21 of the end elements 1 of battery 55 are used for the connection to the system 70, being in particular connected, by means of respective separable joints 72, to a feeding tube 71 and to an output tube 74, respectively; and the other two are closed by removable service caps 75.

When the treatment composition circulates through the elements 1, the polymeric coating material contained in the treatment composition deposits on the inner surfaces 6 and adheres thereto. Once elements 1 have been drained from the treatment composition which has not adhered to the surfaces 6, the battery 55 is sent to a furnace for a step of drying and/or (if needed) a possible polymerization.

The battery 55 is then taken to a step of painting to externally paint the elements 1, by means of traditional electrophoresis or powder painting. It is understood that the painting of the outer parts could be carried out before the above-described treatment of the inner surfaces 6 (which could thus be applied to previously externally painted elements 1).

## Claims

1. A heating radiator element (1) having a body (2) made of aluminium and provided with an inner chamber (5) for water circulation, delimited by inner surfaces (6) of the aluminium body (2); the body (2) comprising a main tubular body (7) having an end part (25) which extends beyond a pair of transversal coupling sleeves (9), internally connected to the tubular body (7) by means of respective holes (29) delimited by peripheral edges (30), and which is provided with a bottom opening (27) closed by a cap (28) ; the cap (28) having a closing surface (33) arranged inside the end part (25) in close proximity of said holes (29); the element being **characterized in that** the closing cap is substantially tangent to the holes (29).

2. An element according to claim 1, wherein the inner chamber (5) is entirely coated by a protective coating (51) made of an anti-corrosion polymeric coating material which protects in use the inner surfaces (6) of the aluminium body (2) against the contact with water.

3. An element according to claim 1 or 2, wherein the closing surface (33) is arranged in close proximity of respective portions (37) of the edges (30) facing the bottom opening (27) and closer to the bottom opening (27).

4. An element according to one of the preceding claims, wherein the cap (28) is completely inserted inside the end part (25).

5. An element according to one of the preceding claims, wherein the closing surface (33) is substantially flushed with an inner lateral surface (16) of the sleeves (9).

6. An element according to one of the preceding claims, wherein the cap (28) is inserted into the end part (25) and is fluid-tightly coupled with said end part (25).

7. An element according to one of the preceding claims, wherein the cap (28) is fixed to the end part (25) by means of a radially external weld.

8. An element according to one of the preceding claims, wherein the end part (25) has a flaring diverging towards the bottom opening (27) and the cap (28) has a corresponding flared shape.

9. An anti-corrosion treatment method for heating radiator elements having a body (2) made of aluminium and provided with an inner chamber (5) for water circulation, delimited by inner surfaces (6) of the aluminium body (2); the body (2) of the element (1) comprising a main tubular body (7) having an end part (25) which extends beyond a pair of transversal coupling sleeves (9), internally connected to the tubular body (7) by means of respective holes (29) delimited by peripheral edges (30), and which is provided with a bottom opening (27) closed by a cap (28); the method comprising a step of closing the bottom opening (27) with a cap (28) having a closing surface (33) arranged within the end part (25) in close proximity of the holes (29) which connect the sleeves (9) to the chamber (5) and substantially tangent to the holes (29); and a step of applying a protecting coating (51) made of an anti-corrosion polymeric coating material to the inner surfaces (6) of the aluminium body (2) so as to completely coat the chamber (5), for protecting in use the inner surfaces (6) of the aluminium body (2) against the contact with water.

10. A method according to claim 9, comprising a step of filling the chamber (5) with a treatment composition containing the coating material, and a step of draining the chamber (5) once the coating material has adhered to the inner surfaces (6) of the chamber (5).

11. A method according to claim 9 or 10, wherein the coating material is deposited by means of an electrochemical deposition process.

12. A method according to one of the claims from 9 to 11, wherein the coating material is deposited by means of an electrophoresis process.

13. A method according to claim 11 or 12, comprising the step of introducing removable electrodes (60) into the element (1).

14. A method according to one of claims from 11 to 13, wherein the inner surfaces (6) are brought in contact with a treatment composition containing the coating material by means of immersion in a bath containing the treatment composition, or by circulating the treatment composition within the elements (1) by means of a forced circulation system (70).

## Patentansprüche

1. Heizkörperelement (1) mit einem Körper (2), hergestellt aus Aluminium und versehen mit einer inneren Kammer (5) zur Umwälzung von Wasser, die durch innere Oberflächen (6) des Aluminium-Körpers (2) begrenzt ist; wobei der Körper (2) einen röhrenförmigen Hauptkörper (7) mit einem Endteil (25) umfasst, welcher sich über ein Paar von quer gestellten Kupplungsmanschetten (9) hinaus erstreckt, die innenseitig mit dem röhrenförmigen Körper (7) mittels jeweiliger, durch periphere Kanten (30) begrenzter Löcher (29) verbunden sind, und welcher mit einer unteren, durch eine Kappe (28) geschlossene Öffnung (27) versehen ist, wobei die Kappe (28) eine Verschlussfläche (33) aufweist, die innerhalb des Endteils (25) in der engen Nachbarschaft der Löcher (29) angeordnet ist; wobei das Element **dadurch gekennzeichnet ist, dass** die Verschlusskappe im wesentlichen tangential zu den Löchern (29) ist.

2. Element gemäß Anspruch 1, wobei die innere Kammer (5) zur Gänze mit einer Schutzbeschichtung (51) hergestellt aus einem polymeren Korrosionsschutz-Beschichtungsmaterial beschichtet ist, welche im Gebrauch die inneren Oberflächen (6) des Aluminiumkörpers (2) gegen den Kontakt mit Wasser schützt.

3. Element gemäß Anspruch 1 oder 2, wobei die Verschlussfläche (33) in enger Nachbarschaft von jeweiligen Abschnitten (37) der Kanten (30) angeordnet ist, welche der unteren Öffnung (27) zugewandt und näher zu der unteren Öffnung (27) sind.

4. Element gemäß einem der vorhergehenden Ansprüche, wobei die Kappe (28) vollständig innerhalb des Endteils (25) eingesetzt ist.

5. Element gemäß einem der vorhergehenden Ansprüche, wobei die Verschlussfläche (33) im wesentlichen bündig mit einer inneren seitlichen Oberfläche (16) der Manschetten (9) ist.

6. Element gemäß einem der vorhergehenden Ansprüche, wobei die Kappe (28) in den Endteil (25) eingesetzt ist und fluiddicht mit dem Endteil (25) verbunden ist.

7. Element gemäß einem der vorhergehenden Ansprüche, wobei die Kappe (28) mittels eines radialen Außengewindes an dem Endteil (25) befestigt ist.

8. Element gemäß einem der vorhergehenden Ansprüche, wobei der Endteil (25) eine zu der unteren Öffnung (27) divergierende Erweiterung hat und die Kappe (28) eine entsprechend sich erweiternde Form hat.

9. Verfahren zur Korrosionsbehandlung für Heizkörperelemente mit einem Körper (2), hergestellt aus Aluminium und versehen mit einer inneren Kammer (5) zur Wasserzirkulation, die durch innere Oberflächen (6) des Aluminium-Körpers (2) begrenzt ist; wobei der Körper (2) des Elementes (1) einen röhrenförmigen Hauptkörper (7) mit einem Endteil (25) umfasst, welcher sich über ein Paar von quer gestellten Kupplungsmanschetten (9) hinaus erstreckt, die innenseitig mit dem röhrenförmigen Körper (7) mittels jeweiliger, durch periphere Kanten (30) begrenzter Löcher (29) verbunden sind, und welcher mit einer unteren, durch eine Kappe (28) geschlossene Öffnung (27) versehen ist; wobei das Verfahren einen Schritt des Verschließens der unteren Öffnung (27) mit einer Kappe (28) umfasst, die eine Verschlussfläche (33), angeordnet innerhalb des Endteils (25) in enger Nachbarschaft der Löcher (29) aufweist, welche die Manschetten (9) mit der Kammer (5) verbinden und im wesentlichen tangential zu den Löchern (29) sind; und einen Schritt des Aufbringens einer Schutzbeschichtung (51) hergestellt aus einem polymeren Korrosionsschutz-Beschichtungsmaterial, auf die inneren Oberflächen (6) des Aluminiumkörpers (2) um die Kammer (5) vollständig zu beschichten, um im Gebrauch die inneren Oberflächen (6) des Aluminiumkörpers (2) gegen den Kontakt mit Wasser zu schützen.

10. Verfahren gemäß Anspruch 9, umfassend einen Schritt des Füllens der Kammer (5) mit einer das Beschichtungsmaterial enthaltenden BehandlungsZusammensetzung, und einen Schritt des Entleerens der Kammer (5), sobald das Beschichtungsmaterial an den inneren Oberflächen (6) der Kammer (5) haftet.

11. Verfahren gemäß Anspruch 9 oder 10, wobei das Beschichtungsmaterial mittels eines elektrochemischen Abscheidungsvorgangs abgeschieden wird.

12. Verfahren gemäß einem der Ansprüche 9 bis 11, wobei das Beschichtungsmaterial mittels eines Elektrophoresevorgangs abgeschieden wird.

13. Verfahren gemäß Anspruch 11 oder 12, umfassend den Schritt, entfernbare Elektroden (60) in das Element (1) einzuführen.

14. Verfahren gemäß einem der Ansprüche 11 bis 13, wobei die inneren Oberflächen (6) mit einer das Beschichtungsmaterial enthaltenden Behandlungszusammensetzung durch Eintauchen in ein die Behandlungszusammensetzung enthaltendes Bad in Kontakt gebracht werden, oder durch Umwälzen der Behandlungszusammensetzung innerhalb der Elemente (1) mittels eines Zwangsumwälzungssystems (70).

## Revendications

1. Élément de radiateur de chauffage (1) comprenant un corps (2) en aluminium et pourvu d'une chambre interne (5) pour la circulation de l'eau, délimitée par des surfaces internes (6) du corps en aluminium (2) ; le corps (2) comprenant un corps tubulaire principal (7) ayant une partie d'extrémité (25) qui s'étend au-delà d'une paire de manchons de raccordement transversaux (9), reliés intérieurement au corps tubulaire (7) au moyen de trous (29) respectifs délimités par des bords périphériques (30), et qui est pourvu d'une ouverture inférieure (27) fermée par un bouchon (28) ; le bouchon (28) ayant une surface de fermeture (33) agencée à l'intérieur de la partie d'extrémité (25) très proche desdits trous (29) ; l'élément étant caractérisé en ce le bouchon de fermeture est essentiellement tangent aux trous (29).

2. Élément selon la revendication 1, dans lequel la chambre interne (5) est entièrement revêtue par un revêtement de protection (51) réalisé en un matériau de revêtement polymère anticorrosif qui protège, lors de l'utilisation, les surfaces internes (6) du corps en aluminium (2) d'un contact avec l'eau.

3. Élément selon la revendication 1 ou 2, dans lequel la surface de fermeture (33) est agencée très proche des parties (37) respectives des bords (30) en face de l'ouverture inférieure (27) et plus proche de l'ouverture inférieure (27).

4. Élément selon l'une des revendications précédentes, dans lequel le bouchon (28) est complètement inséré à l'intérieur de la partie d'extrémité (25).

5. Élément selon l'une des revendications précédentes, dans lequel la surface de fermeture (33) est pratiquement de niveau avec une surface latérale interne (16) des manchons (9).

6. Élément selon l'une des revendications précédentes, dans lequel le bouchon (28) est inséré dans la partie d'extrémité (25) et est couplé de manière étanche au liquide avec ladite partie d'extrémité (25).

7. Élément selon l'une des revendications précédentes, dans lequel le bouchon (28) est fixé à la partie d'extrémité (25) au moyen d'une soudure radialement externe.

8. Élément selon l'une des revendications précédentes, dans lequel la partie d'extrémité (25) présente un évasement divergent vers l'ouverture inférieure (27) et le bouchon (28) présente une forme évasée correspondante.

9. Procédé de traitement anticorrosion pour des éléments de radiateur de chauffage ayant un corps (2) en aluminium et pourvus d'une chambre interne (5) pour la circulation de l'eau, délimitée par des surfaces internes (6) du corps en aluminium (2) ; le corps (2) de l'élément (1) comprenant un corps tubulaire principal (7) ayant une partie d'extrémité (25) qui s'étend au-delà d'une paire de manchons de raccordement transversaux (9), reliés intérieurement au corps tubulaire (7) au moyen de trous respectifs (29) délimités par des bords périphériques (30), et qui est pourvu d'une ouverture inférieure (27) fermée par un bouchon (28) ; le procédé comprenant une étape de fermeture de l'ouverture inférieure (27) avec un bouchon (28) ayant une surface de fermeture (33) agencée à l'intérieur de la partie d'extrémité (25) très proche des trous (29) qui relient les manchons (9) à la chambre (5) et essentiellement tangent aux trous (29) ; et une étape d'application d'un revêtement de protection (51) réalisé en un matériau de revêtement polymère anticorrosif pour les surfaces internes (6) du corps en aluminium (2) de manière à revêtir totalement la chambre (5), pour protéger les surfaces internes (6), lors de l'utilisation, du corps en aluminium (2) d'un contact avec l'eau.

10. Procédé selon la revendication 9, comprenant une étape de remplissage de la chambre (5) avec une composition de traitement contenant un matériau de revêtement, et une étape de vidange de la chambre (5) une fois que le matériau de revêtement s'est collé aux surfaces intérieures (6) de la chambre (5).

11. Procédé selon la revendication 9 ou 10, dans lequel le matériau de revêtement est déposé au moyen d'un procédé de dépôt électrochimique.

12. Procédé selon l'une des revendications 9 à 11, dans lequel le matériau de revêtement est déposé au moyen d'un processus d'électrophorèse.

13. Procédé selon la revendication 11 ou 12, comprenant l'étape qui consiste à introduire des électrodes amovibles (60) dans l'élément (1).

14. Procédé selon l'une des revendications 11 à 13, dans lequel les surfaces internes (6) sont mises en contact avec une composition de traitement contenant le matériau de revêtement par immersion dans un bain contenant la composition de traitement, ou par circulation de la composition de traitement dans les éléments (1) au moyen d'un système à circulation forcée (70).
